Europäisches Patentamt

European Patent Office

Office européen des brevets

(11) Veröffentlichungsnummer: **0 156 269**
**A2**

(12) **EUROPÄISCHE PATENTANMELDUNG**

(21) Anmeldenummer: 85103036.1

(22) Anmeldetag: 15.03.85

(51) Int. Cl.⁴: **F 15 D 1/04**

(30) Priorität: 27.03.84 HU 121384

(43) Veröffentlichungstag der Anmeldung:
02.10.85 Patentblatt 85/40

(84) Benannte Vertragsstaaten:
CH DE FR GB IT LI SE

(71) Anmelder: INNOFINANCE Altalános Innovációs
Pénzintézet
Szabadság tér 5-6
Budapest V(HU)

(72) Erfinder: Lajos, Tamás, Dipl.-Ing.
Asztalos J.u. 10
H-1011 Budapest(HU)

(72) Erfinder: Preszler, László, Dipl.-Ing.
Guyon köz 7
H-1026 Budapest(HU)

(72) Erfinder: Marschall, József, Dipl.-Ing.
Apostol u. 23.
H-1025 Budapest(HU)

(72) Erfinder: Stibrányi, Márton, Dipl.-Ing.
Hajlat u. 4
H-1221 Budapest(HU)

(72) Erfinder: Szentmártony, Tibor, Dipl.-Ing.
Ménesi ut 68
H-1118 Budapest(HU)

(72) Erfinder: Kurutz, Imre, Dipl.-Ing.
Ménesi ut 83/b
H-1118 Budapest(HU)

(72) Erfinder: Litvai, Elemér, Dipl.-Ing.
Szolyva u. 6/a
H-1126 Budapest(HU)

(74) Vertreter: Patentanwälte Viering & Jentschura
Steinsdorfstrasse 6
D-8000 München 22(DE)

(54) Verfahren und Vorrichtung zum Vermindern von Strömungsverlusten in strömungstechnischen Maschinen und Einrichtungen.

(57) Gemäß des Verfahrens zum Vermindern von Strömungsverlusten und zum Herbeiführen geordneter Strömungsverhältnisse bei einer Änderung der Strömungsrichtung in Strömungsmaschinen und Strömungseinrichtungen wird zum Erzeugen eines Unterdruckes durch plötzliche Änderung des Strömungsquerschnittes ein sich an diese Querschnittsänderung anschließender, die Strömung (2) ablenkender, zur Strömung teilweise offener Hohlraum (3) gebildet.

Fig.8

EP 0 156 269 A2

*1*

### Verfahren und Vorrichtung zum Vermindern von Strömungsverlusten in strömungstechnischen Maschinen und Einrichtungen

*Die Erfindung bezieht sich auf ein Verfahren und eine Vorrichtung zum Vermindern von Strömungsverlusten in strömungstechnischen Maschinen und Einrichtungen bei Änderung der Strömungsrichtung bzw. zum Herbeiführen geordneter Strömungsverhältnisse.*

*Das erfindungsgemäße Verfahren bzw. die erfindungsgemäße Vorrichtung kann bei radialen, halbaxialen bzw. axialen Gebläsen, Lüftern und Pumpen, ferner bei Rohrleitungen und anderen lufttechnischen Einrichtungen besonders vorteilhaft verwendet werden, bei welchen das strömende Medium an dem Einlaufquerschnitt oder bei der Beaufschlagung auf das Flügelgitter, an winkligen Absätzen oder stufenartigen Querschnittsverengungen, Kontraktionen zu einer Richtungsänderung gezwungen ist. Die Richtungsänderung bzw. die nicht geeignete Richtungsänderung verursacht selbstverständlich hohe Verluste. Zur ausführlichen Darstellung des Problems bzw. der gestellten Aufgabe wird die Strömungsänderung bzw. der Verlauf der Stromlinien im Falle einer Richtungsänderung mit Hilfe der beigelegten Zeichnung näher erörtert.*

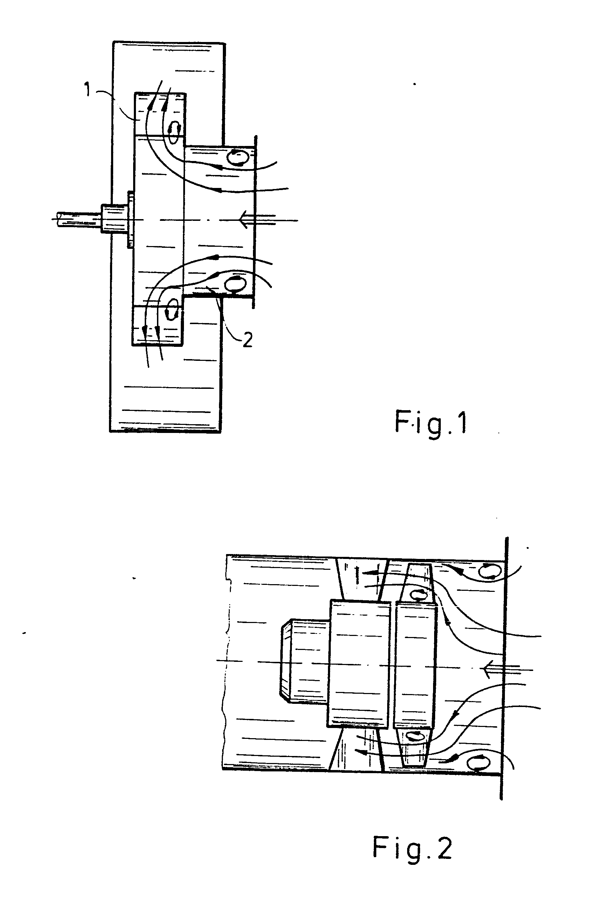

*Aus Fig. 1 ist die Änderung der Strömungsrichtung während des Einströmens eines Fluids in eine radiale Turbomaschine ersichtlich. In der Zeichnung sind mit 1 ein Laufrad und mit 2 ein Saugrohr bezeichnet, ferner ist aus dieser Fig. ersichtlich, daß das einströmende Medium auf seinem Weg zum Laufrad 1 zu einer bedeutenden Richtungsänderung gezwungen ist. Aus Fig. 1 ist ersichtlich, daß die Richtungsänderung im wesentlichen an zwei Stellen zustandekommt, nämlich an der Eintrittsstelle in die Maschine und an der Verbindungsstelle des Laufrades 1 und des Saugrohres 2. Aus der Fig. 1 ist auch ersichtlich, daß an den*

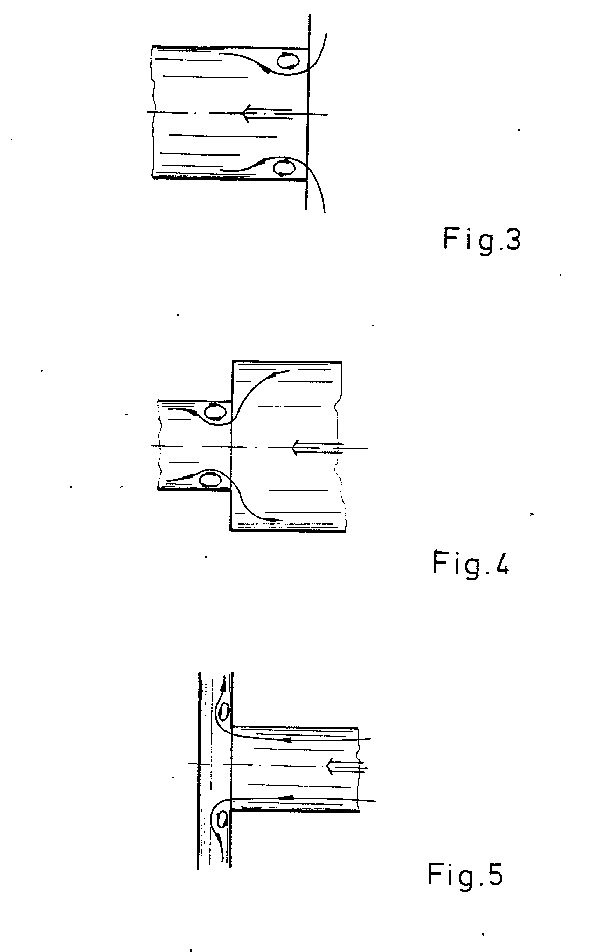

Stellen der Richtungsänderung, also an dem Einlaufquerschnitt und an der Verbindungsstelle je eine Ablöseblase gebildet wird. Diese Ablöseblase begrenzt einen geschrumpften, kontrahierten Strömungsraum. Die die Kontraktion der Strömung hervorrufende Ablöseblase verursacht aufgrund zweier Mechanismen Strömungsverluste. Einerseits entsteht ein sog. Borda-Carnot-Verlust bei der Expansion der kontrahierten Flüssigkeitsströmung, andererseits nimmt der Wirkungsgrad der Energieumsetzung ab, wenn ein bedeutender Teil des Laufrades durch die Ablöseblase versperrt ist. Das bedeutet in der Praxis, daß ein Teil der Beschaufelung nicht an der Energieumsetzung teilnimmt bzw. die anderen Teile der Beschaufelung arbeiten nicht unter den Verältnissen, entsprechend denen die Turbomaschine ausgelegt wurde. Die gleiche Erscheinung bei axialen Maschinen ist aus Fig. 2 ersichtlich. Bei diesen Maschinen wird ebenfalls an der Einlaufstelle eine Ablöseblase gebildet. Eine vergleichbare Erscheinung kann auch bei den aus den Fig. 3, 4 und 5 ersichtlichen Vorrichtungen beobachtet werden. Bei der aus Fig. 3 ersichtlichen Ausführungsform wird das strömende Medium in ein Rohr eingesaugt. In Fig. 4 sind die Stromlinien der Strömung an der Stelle einer plötzlichen Verengung dargestellt und aus Fig. 5 ist ein ebener Diffusor ersichtlich. Bei allen drei Ausführungsformen kann eine Entstehung von Ablöseblasen beobachtet werden. Da die Ablöseblasen eindeutig zur Steigerung der Strömungsverluste beitragen, wurden bisher zahlreiche Experimente durchgeführt, um die Ablöseblasen zu eliminieren und dadurch die Strömungsverluste zu vermindern.

Nach einem bekannten Verfahren zum Vermindern der mit der Richtungsänderung der Strömung verbundenen Verluste werden die Kanten an der Stelle der Richtungsänderung abgerundet. Dadurch wird erreicht, daß die Änderung der Strömungsrichtung stufenweise und bei einer günstigen Ausführung ohne bedeutende Ablösung erfolgt. Die Abrundung von zylindersymmetrische Strömungsquerschnitte begrenzenden Kanten kann durch die Ausbildung von Viertel-Torusflächen oder ähnlichen Flächen geschehen, die insbesondere bei Blechkonstruktionen die Verwendung einer komplizierten und kostenspieligen Treibungstechnologie erforderlich macht. Bei Gußstücken und bei durch Zerspanung hergestellten Einrichtungen oder Einrichtungselementen fallen kostenspielige Arbeitsvorgänge und ein zusätzlicher Materialverbrauch an, um derartige Abrundungen zu schaffen. Auch in den einfachsten Fällen, z.B. in einem Plattenkanal mit rechteckigem Querschnitt erfordert die Abrundung eine relativ komplizierte Konstruktion und bei zylinderförmigen Übergängen ist die Abrundung fertigungstechnisch der anspruchsvollste Teil der Einrichtung.

Bei mit Hilfe einfacher Blechtechnologien hergestellten Radiallüftern sollte bisher eine Torusflächen-Abrundung z.B. an der Vorplatte des Laufrades oder an dem vor dem Laufrad angeordneten Saugrohr - vielleicht sogar gleichzeitig an den beiden Stellen - ausgebildet werden. Während alle anderen Teile des Lüfters aus ebenen oder gebogenen Platten hergestellt werden, beansprucht das erwähnte Element eine Auftreibung. Diese Tatsache ist von dem Standpunkt aus sehr nachteilig, daß auch zu einem Typ gehörende Maschinen mit abweichenden Abmessungen verschiedene und kostspielige Preßwerkzeuge erfordern. Die Fertigung solcher Werkzeuge ist aber nur bei Großserien wirtschaftlich, so daß die Abrundungen bei in Einzelfertigung hergestellten Lüftern oder bei Kleinserien nur mit großer Fachkenntnis und einer einen hohen Arbeitsaufwand erfordernden manuellen Auftreibung ausgebildet werden können. Diese Lösung ist einerseits kostspielig, andererseits entspricht die Qualität der Arbeit in vielen Fällen nicht den Anforderungen. Bei größeren Einrichtungen werden die torodialen Oberflächen aus vorgepreßten Blättern zusammengeschweißt. Eine derartige Ausbildung der Vorplatte der radialen Laufräder sollte aus Festigkeitsgründen vermieden werden. Ähnliche Schwierigkeiten treten bei Saugtrichtern von aus dem Freien ansaugenden strömungstechnischen Einrichtungen oder an dem Spitzkegel der Nabe von axialen oder halbaxialen Turbomaschinen auf. Da ein Hersteller in der Regel mehrere Typen von strömungstechnischen Maschinen anfertigt, z.B. verschiedene Lüfter mit voneinander verschiedenen Abmessungen und Anordungen, verursacht die entsprechende Abrundung an den entsprechenden Maschinenelementen in jedem Fall sehr hohe Kosten.

Bei anderen, z.B. durch Gießverfahren hergestellten ähnlichen Maschinenelementen - z.B. bei Pumpen, Lüftern usw. - macht die Fertigung von Abrundungen, Biegungsstellen nur einen kleinen Anteil der Herstellungskosten der kompletten Maschinen aus, jedoch erfordern diese Arbeitsvorgänge auch hier sehr aufwendige Produktionsschritte.

4

*Eine Aufgabe der Erfindung besteht darin, ein Verfahren und eine Vorrichtung zur Durchführung des Verfahren zu schaffen, mit deren Hilfe die Strömungsverluste auf einfache Weise und mit einfachen Mitteln vermindert und die Beaufschlagung der Beschaufelung gleichmäßiger erfolgen kann, wobei für das Vorgehen und für die für die Durchführung des Verfahrens geeignete Vorrichtung nur ein geringer Aufwand erforderlich ist.*

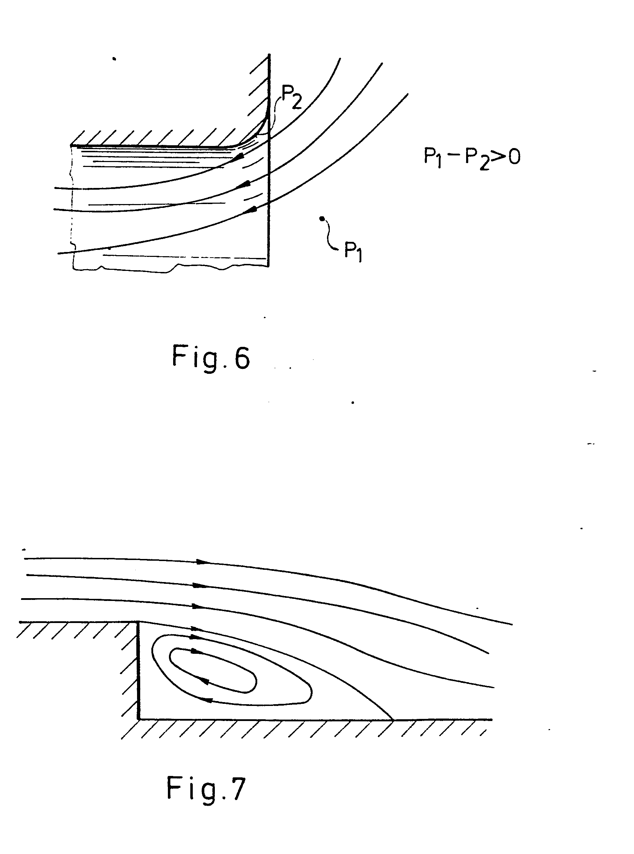

*Die Erfindung beruht auf der Erkenntnis, daß im Falle einer Potentialströmung sich das um eine Abrundung strömende Medium beschleunigt, während sein Druck abnimmt. Zur Durchführung der Richtungsänderung des strömenden Mediums soll eine Druckdifferenz zwischen dem Druck, der an einer Stelle mit gegenüber der Abrundung größeren Radius herrscht, und dem auf der Oberfläche der Abrundung bestehenden Druck aufrechterhalten werden. Diese Erscheinung ist in Fig. 6 erläutert, in welcher eine Einlauf-Abrundung gezeigt ist und die Stellen der Drücke eingetragen sind, aus denen die Druckdifferenz $p_1 - p_2 > 0$ hergeleitet ist. Diese Druckdifferenz kann durch Ablöseblasen hervorgerufen werden. Dieser Prozeß ist in Fig. 7 dargestellt, in welcher eine Ablösesblase im Bereich einer scharfen Kante sichtbar ist. An dem sich an die äußere Strömung anschließenden Rand der Ablöseblase bildet sich eine Scherschicht aus, welche einen Teil des in der Ablöseblase befindlichen Mediums mitreißt. Das hat zur Folge, daß sich im Raum unter der Scherschicht ein Unterdruck aufbaut, durch den ein Anschmiegen der äußeren Strömung an die Ablöseblase erreicht wird. Die durch die Scherschicht mitgerissene Luft strömt an der Stelle des Anlegens in die Blase zurück. Diese Ablöseblase nimmt an der Änderung der Strömungsrichtung teil, verursacht jedoch einen zusätzlichen Verlust, da die Kontraktion an einer Stelle auftritt, an der sie vom Gesichtspunkt des optimalen Betriebs der Maschinen und Einrichtungen her unerwünscht ist. Der Grundgedanke der Erfindung kann also darin gesehen werden, daß der zur Umlenkung des strömenden Mediums erforderliche Unterdruck durch eine Ablöseblase erzeugt wird, die in einem vor der geplanten Umlenkstelle absichtlich ausgebildeten vorbestimmten Hohlraum lokalisiert wird. Das diese Ablöseblase erzeugende mechanische Element soll derart dimensioniert werden, daß sich die Strömung außerhalb der Ablöseblase an der geplanten Umlenkstelle an der festen Begrenzungswand anlegt.*

Der Gegenstand der Erfindung ist also ein Verfahren zum Vermindern von Strömungsverlusten und zum Herbeiführen geordneter Strömungsverhältnisse bei einer Änderung der Strömungsrichtung in strömungstechnischen Maschinen und Einrichtungen.

Die gestellte Aufgabe wird erfindungsgemäß dadurch gelöst, daß entlang einer die Strömung begrenzenden festen Fläche oder in einigen Abschnitten der Fläche ein die Strömung ablenkender, zur Strömung hin teilweise offener Unterdruckhohlraum durch unvermittelte Änderung des Strömungsquerschnitts ausgebildet wird.

Durch die Erfindung wird ferner eine zur Durchführung des erfindungsgemäßen Verfahrens geeignete Vorrichtung geschaffen, die sich dadurch auszeichnet, daß an der Stelle der Änderung der Strömungsrichtung ein teilweise offener, durch im Meridianschnitt gerade oder gebogene Wände begrenzter Hohlraum ausgebildet ist, der den erforderlichen Unterdruck erzeugt.

Bei einer bevorzugten Ausführungsform der Erfindung ist der den Unterdruck erzeugende Hohlraum bei radialen oder halbaxialen Maschinen an der Verbindungsstelle eine Laufrades und eines Saugrohres oder in dem Laufrad selbst ausgebildet.

Bei einer bevorzugten Ausführungsform der Erfindung ist der den Unterdruck erzeugende Hohlraum durch eine, zwischen einer im Saugrohr angeordneten, senkrecht zu diesem oder unter einem bestimmten anderen Winkel angestellten Ringplatte und einem Wandabschnitt des Saugrohrs gebildet.

Bei einer weiteren bevorzugten Ausführungsform der Erfindung ist der den Unterdruck erzeugende Hohlraum zur Begünstigung der Durchströmung an der Eintrittsstelle des Saugrohrs oder bei unvermittelter Querschnittsverminderung durch eine am Anfang des Saugrohres oder an der Stelle der Querschnittsveränderung angebrachte in den Strömungsquerschnitt hineinragende Ringplatte gebildet.

6

Für die erfindungsgemäße Vorrichtung ist ferner kennzeichnend, daß der beispielsweise als Ringplatte ausgebildete Ansatz derart angeordnet ist, daß sie mit einer an dem Saugrohr angeschlossenen Stirnwand einen Winkel einschließt.

Bei einer weiteren bevorzugten Ausführungsform der Erfindung ist der den Unterdruck erzeugende Hohlraum im Stator oder im Rotor von axialen oder halbaxialen Maschinen von einem an der Nabe angebrachten und zur Strömungsrichtung parallel verlaufenden Ansatz ausgebildet.

Bei einer weiteren bevorzugten Ausführungsform der Erfindung ist der den Unterdruck erzeugende halboffene Hohlraum durch die Abstufung der Nabe ausgebildet.

Nachstehend wird anhand einiger in der Zeichnung dargestellter Ausführungsformen der Vorrichtung zur Durchführung des Verfahrens die Erfindung näher erläutert. In der Zeichnung zeigt

Fig. 1 die Einströmung in eine Maschine bei radialen Turbomaschinen,

Fig. 2 die Einströmung in eine Maschine bei axialen Maschinen,

Fig. 3 bis 5 den Strömungsverlauf in Saugrohren, im Falle einer plötzlichen Querschnittsverminderung oder eines ebenen Diffusors,

Fig. 6 eine Strömung entlang einer abgerundeten Kante,

Fig. 7 die Ausbildung einer Ablöseblase,

Fig. 8 eine erfindungsgemäße Ausführungsform, bei welcher der den Unterdruck erzeugende Hohlraum bei radialen Maschinen, z.B. bei Lüftern ausgebildet ist,

Fig. 9 eine Variante der aus Fig. 8 ersichtlichen Ausführungsform,

Fig. 10 einen ebenfalls bei radialen Maschinen angeordneten bzw. ausgebildeten Unterdruck-Hohlraum,

Fig. 11 eine weitere Variante der aus Fig. 10 ersichtlichen Ausführungsform bei radialen Maschinen,

Fig. 12 einen den Unterdruck erzeugenden Hohlraum im Falle einer Einströmung in ein in der Stirnwand ausgebildetes Rohr,

Fig. 13 eine weitere Variante der Ausführungsform nach Fig. 12,

Fig. 14 die Anordnung des den Unterdruck erzeugenden Hohlraums im Falle einer günstigeren Einströmung,

Fig. 15 bis 18 je eine Ausführungsform des den Unterdruck erzeugenden
Hohlraumes bei plötzlicher Querschnittsverengung,

Fig. 19 bis 22 die Ausbildung des erfindungsgemäßen, den Unterdruck erzeugenden Hohlraumes bei axialen oder halbaxialen Maschinen.

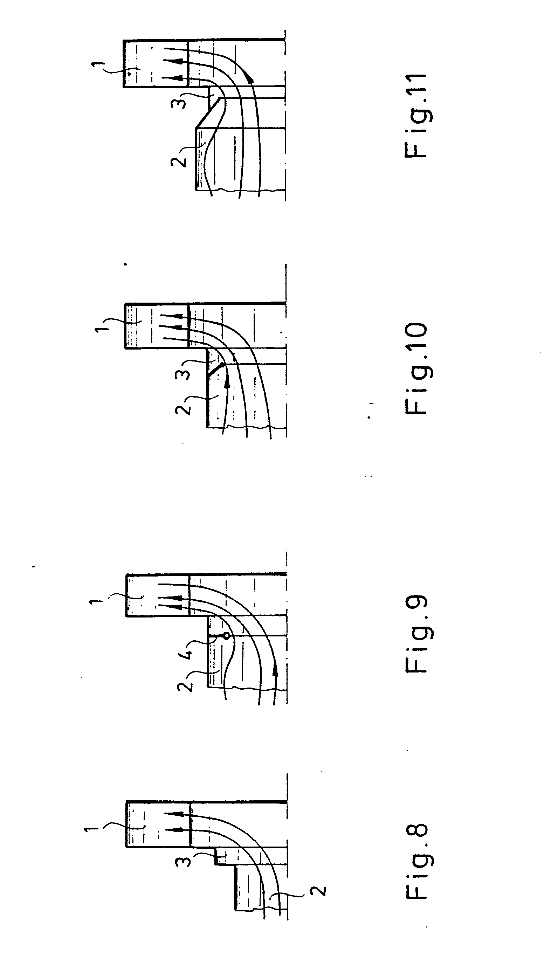

Aus Fig. 8 ist eine bevorzugte Ausführungsform der Erfindung mit einem
Laufrad 1 und einem stromaufwärts angeordneten Saugrohr 2 eines
Radiallüfters ersichtlich. Zwischen dem Laufrad 1 und dem Saugrohr 2 ist
ein Hohlraum 3 ausgebildet, in welchem eine Ablöseblase entsteht.
Aufgrund des in dem die Ablöseblase enthaltenden Hohlraum 3
herrschenden Unterdrucks wird die Strömung umgelenkt. Aus Fig. 1 ist ersichtlich, daß die Stromlinien zu dem Laufrad 1 hin geordnet weiterlaufen, praktisch wurde also die erwünschte geordnete Strömung nach der
Änderung der Strömungsrichtung erreicht. Das bedeutet gleichzeitig, daß
hinter der Umlenkung keine weitere Strömungsverluste verursachende Ablösung entsteht. Die in der Fig. 9 dargestellte Ausführungsform löst im
wesentlichen die gleiche Aufgabe wie die aus Fig. 8 ersichtliche Ausführungsform, wobei jedoch hier der den Unterdruck erzeugende Hohlraum
mit Hilfe einer im Saugrohr 2 angeordneten, auf dessen Wand senkrecht
angeordneten Ansatz 4 ausgebildet ist. Der Ansatz 4 kann beispielsweise
als radial in den Strömungsweg hineinragende, den Strömungsweg verengende Ringplatte ausgebildet sein, die stromaufwärts in einem Abstand
vor der Verbindungsstelle zwischen dem Saugrohr 2 und dem Laufrad 1
angeordnet ist. Der von dem Ansatz 4 und der stromabwärts an diesen angeschlossenen Saugrohrwand begrenzte Raum, bildet den den Unterdruck erzeugenden Hohlraumabschnitt 3 und aus der Fig. ist ersichtlich, daß die Stromlinien hinter der Umlenkstelle ebenso geordnet weiterlaufen wie bei dem Eintritt in das Saugrohr 2. Es treten also keine Strömungsverluste auf. In Fig. 10 ist eine Ausführungsvariante der aus Fig. 9 ersichtlichen Ausführungsform dargestellt, wobei hier der den Unterdruck erzeugende Hohlraum 3 dadurch geschaffen ist, daß der im Saugrohr 2 angeordnete Ansatz 4 mit dem stromabwärts der Anschlußstelle des Ansatzes 4 an der Saugrohrwand sich anschließenden Wandabschnitt einen spitzen Winkel einschließt, der entsprechend Fig. 10 ca. 40 bis 50° beträgt. In der Fig. sind die Stromlinien dargestellt und es ist ersichtlich, daß praktisch eine verlustfreie Strömung erreicht wird. Fig. 11 zeigt eine weitere Ausführungsform der Vorrichtung. An der Umlenkstelle sind erfindungsgemäß Ausführungsformen in Form von zylindrischen oder höchstens konischen Elementen mit gerader Mantellinie angeordnet, die mit einfachen Mitteln und billig hergestellt werden können.

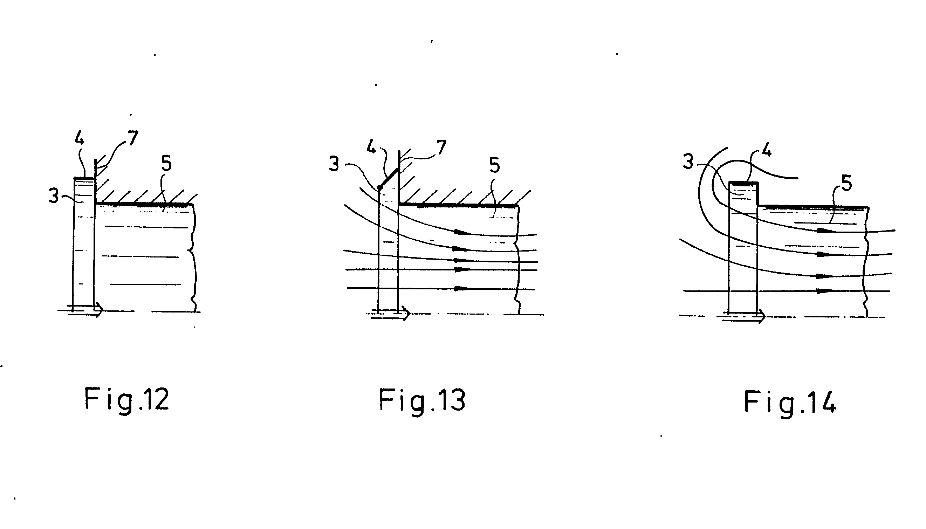

In den Fig. 12 bis 14 sind verschiedene Ausführungen von Rohreintrittsstellen zur Verminderung der Strömungsverluste beim Einströmen aus dem Freien gezeigt. Die Abbiegung der Strömung wird ähnlich wie oben beschrieben durch einen geeignet ausgestalteten, einen Unterdruck erzeugenden Hohlraum begünstigt. Die Aufgabe der Dimensionierung besteht darin, daß die Strömung an der Einlaufstelle die Saugrohrwand mit annähernd mantellinienparalleler Richtung an der Verbindungsstelle einer Stirnwand 7 und eines Saugrohres 5 erreicht, dessen Achse senkrecht zu der Stirnwand 7 verläuft, und dadurch keine Kontraktion des einströmenden Mediums am Einlauf ensteht, die Strömungsverluste verursachen könnte. Gemäß der Ausführungsform aus Fig. 12 ist an der Stirnwand 7 ein zu dieser senkrechter Rohransatz 4 größeren Durchmessers als der Saugrohrdurchmesser angeordnet. Der Rohransatz verläuft konzentrisch zur Saugrohrachse und bildet den Hohlraum 3 an der Stirnwand 7 im Bereich zwischen dem Rohransatz 4 und dem Saugrohr 5. Die Stromlinien zeigen deutlich, daß einerseits kein Verlust auftritt, andererseits die Strömung auch hinter der Einmündung geordnet weiterläuft. Fig. 13 zeigt eine Variante der Ausführungsform aus Fig. 12, wobei der Rohransatz 3 ein Konusrohrstück ist, dessen Innenseite mit der Stirnwand 7 einen spitzen Winkel von beispielsweise 45° einschließt. Fig. 14 stellt eine weitere Ausführungsvariante dar, bei der das Saugrohr 5 nicht an der Stirnwand 7 angeordnet ist, sondern frei mündet, jedoch die Einlaufströmung mittels eines Rohransatzes 4 entsprechend Fig. 12 begünstigt ist.

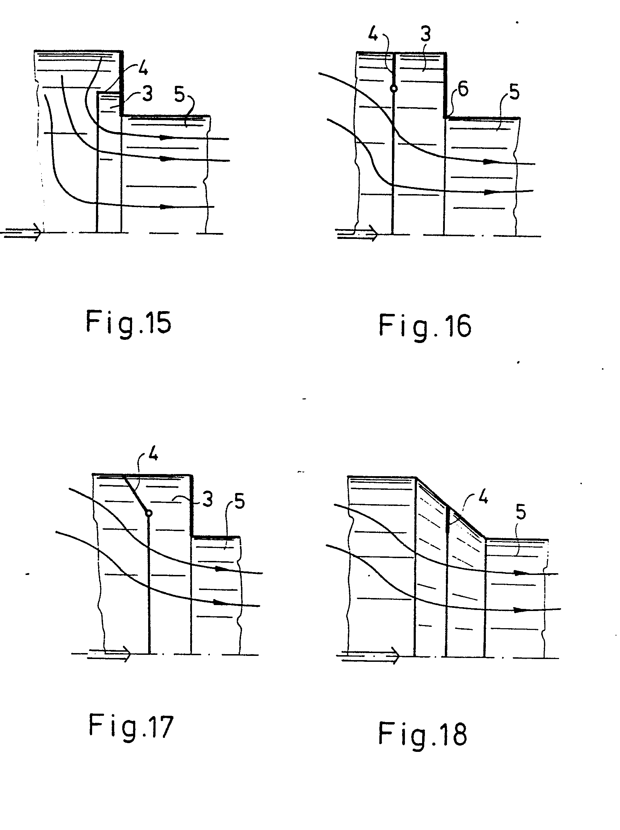

Aus den Fig. 15 bis 18 ist die Vorrichtung zur Durchführung des erfindungsgemäßen Verfahrens in dem Falle ersichtlich, wenn im Wege einer geraden Rohrströmung eine unvermittelte Querschnitssminderung vorliegt. Die Ablöseblase wird in ähnlicher Weise auch in diesem Fall gebildet und die Erzeugung der Ablöseblase und dadurch eine Einlaufströmung mit geringem Strömungsverlust sind durch die erfindungsgemäße Konstruktion herbeigeführt. Im Ausführungsbeispiel nach Fig. 15 ist der den Unterdruck erzeugende Hohlraum 3 an der Verbindungsstelle des Saugrohres 5 größeren Durchmessers und des sich stromab daran koaxial anschließenden Saugrohres 5 kleineren Durchmessers dadurch ausgebildet, daß an der die Rohre 5 senkrecht zu deren Achse verbindenden Wand ein zu dieser senkrechter Rohransatz 4 wie nach Fig. 12 ausgebildet ist. In diesem Fall ist der den Unterdruck erzeugende Hohlraum 3 innerhalb des Saugrohres 5 größeren Durchmessers zwischen dem Saugrohr 5 kleineren Durchmessers und dem Rohransatz 4 ausgebildet. Aus der Fig. ist ersichtlich, daß die Strömung auch hinter dem Einlauf in das kleinere Rohr 5 geordnet weiterläuft und daß die Richtungsänderung mit vernachlässigbarem Verlust stattfindet. Eine Variante des Ausführungsbeispiels aus Fig. 15 ist in Fig. 16 dargestellt, nach welcher der den Unterdruck erzeugenden Hohlraum 3 an der Übergangsstelle der Rohre 5 in dem Endabschnitt des Saugrohres 5 größeren Durchmessers dadurch gebildet ist, daß an der Wand des Rohres 5 größeren Durchmessers ein senkrecht zur Strömungsrichtung ausgerichteter plattenförmiger Ringansatz 4 angeordnet ist, von dem der Hohlraum 3 stromabwärts begrenzt ist. Weitere Ausführungsformen sind aus den Fig. 17 und 18 ersichtlich. Die Ausführungsform aus Fig. 17 entspricht derjenigen aus Fig. 16 mit der Ausnahme, daß der Ringansatz 4 sich in Strömungsrichtung trichterförmig verengt. Nach Fig. 18 ist die Übergangswand zwischen den Rohren 5 trichterförmig und der plattenförmige Ringansatz ist an dieser Übergangswand im Abstand vor der Mündung des kleineren Rohres 5 angeordnet und senkrecht zur Strömungsrichtung ausgerichtet.

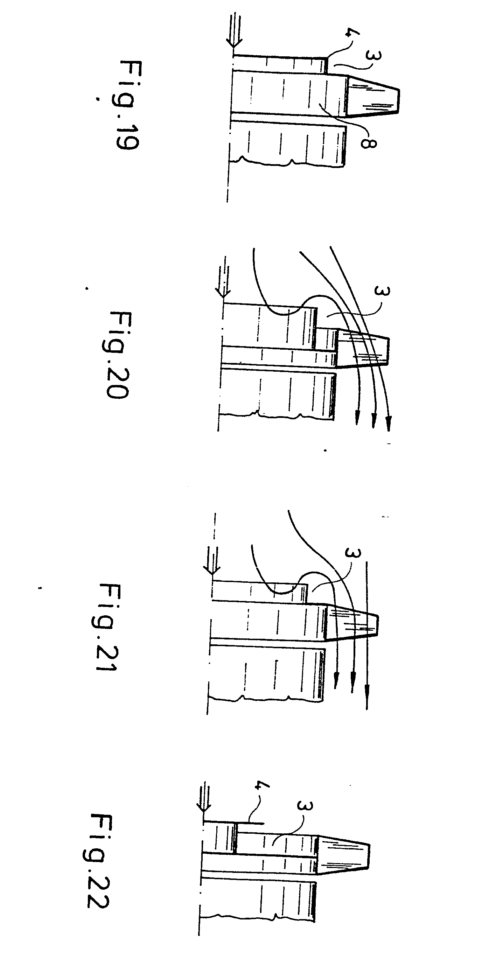

Für die Verwendung des erfindungsgemäßen Verfahrens und der Vorrichtung bei axialen oder halbaxialen Lüftern, bzw. erfindungsgemäß ausgebildete Axiallüfter sind in den Fig. 19 bis 22 dargestellt. Bei der Ausführungsform aus Fig. 19 bildet ein radial außerhalb des axialen Rohransatzes 4 liegender Bereich den den Unterdruck erzeugenden Hohlraum 3, wobei der Rohransatz 4 senkrecht zu der Stirnfläche der Nabe 8 und parallel zur Ausströmrichtung ausgerichtet ist und einen kleineren Durchmesser als die innere Umfangsfläche des Lüfters hat. Aus der Zeichnung ist ersichtlich, daß die Änderung der Strömungsrichtung verlustfrei abläuft und als weiterer Vorteil ist die Beschaufelung völlig ausgenutzt. Das kann bei der Ausführungsform des Axiallüfters aus Fig. 2 nicht behauptet werden. Bei der Ausführungsform aus Fig. 20 ist der Rohransatz 4 ebenfalls an der Stirnfläche der Nabe 8 montiert. Jedoch ragt die innere Wand des Luftrades axial über die Nabenstirnfläche vor und der Bereich radial zwischen dem Rohransatz 4 und dem Laufrad 1 bildet den den Unterdruck erzeugenden Hohlraum 3. Bei dem Ausführungsbeispiel nach Fig. 21 ist die Nabe 8 an dem der Strömungsrichtung entgegengesetzten Stirnende abgestuft ausgebildet und der den Unterdruck erzeugende Hohlraum 3 bildet sich an der aus der Fig. ersichtlichen Stelle. Ein weiteres, den Rahmen der Erfindung nicht begrenzendes Ausführungsbeispiel ist aus Fig. 22 deutlich ersichtlich.

Die Erfindung hat den Vorteil, daß die einfache Ausbildung der Einlaufstellen die Planung eines solchen Laufrades ermöglicht, das auch bei verschiedenartig angeordneten Maschinen gleich aufgebaut werden kann. Das gleiche gilt für die erläuterte Ausbildung der Gehäuse von Axiallüftern.

Ein weiterer Vorteil der Erfindung zeigt sich darin, daß die hergestellten Eirichtungen, insbesondere im Falle von Blechkonstruktionen, technologisch einheitlicher gestaltet werden können. Wie bereits angegeben, werden die aus Blech hergestellten strömungstechnischen Maschinen und Einrichtungen überwiegend durch einfache Schlosserarbeit gefertigt und nur die aufgetriebenen Elemente benötigen spezielle Maschinen und Werkzeuge. Die Verwendung der erfindunsgemäßen Vorrichtung und des Verfahrens macht diese Treibwerkzeuge und damit die Treibvorgänge überflüssig, wodurch auch kleinere Betriebe ohne spezielle Maschinen geeignet sind, moderne Einrichtungen, z.B. Lüfter, mit hohem Wirkungsgrad in kleineren Serien herzustellen.

0156269

## Patentansprüche

1. Verfahren zum Vermindern von Strömungsverlusten und zum Herbeiführen geordneter Strömungsverhältnisse bei Strömungsänderungen in Strömungsmaschinen und Strömungseinrichtungen, dadurch gekennzeichnet, daß entlang einer die Strömung begrenzenden festen Fläche oder in einigen Abschnitten der Fläche ein die Strömung ablenkender, zur Strömung offener Hohlraum (3) zum Erzeugen eines Unterdruckes durch plötzliche Veränderung des Strömungsquerschnitts gebildet wird.

2. Vorrichtung zur Durchführung des Verfahrens nach Anspruch 1, dadurch gekennzeichnet, daß an einer Stelle einer Strömungsänderung, insbesondere der Strömungsrichtung, ein teilweiser offener, durch im Meridianschnitt gerade oder gebogene Wände begrenzter Hohlraum (3) ausgebildet ist, der den erforderlichen Unterdruck erzeugt.

3. Vorrichtung nach Anspruch 2, dadurch gekennzeichnet, daß der den Unterdruck erzeugende Hohlraum (3) in radialen oder halbaxialen Strömungsmaschinen an einer Verbindungsstelle eines Laufrades (1) und eines Saugrohrs (2) oder im Laufrad (1) selbst ausgebildet ist.

4. Vorrichtung nach Anspruch 3, dadurch gekennzeichnet, daß der den Unterdruck erzeugende Hohlraum (3) durch einen Rohrabschnitt gebildet wird, der zwischen einem Ansatz (4), der in dem Saugrohr (2) senkrecht oder in einem bestimmten anderen Winkel zu der Saugrohrwand ausgerichtet ist, und der Wand des Saugrohrs (2) angeordnet ist.

5. Vorrichtung nach Anspruch 2, dadurch gekennzeichnet, daß zur Begünstigung der Durchströmung an einer Einlaufstelle des Saugrohres (2) oder an einer Stelle plötzlicher Querschnittsänderung der den Unterdruck erzeugende Hohlraum (3) von einem am Einlauf des Saugrohrs (2) oder an der Stelle der Querschnittsänderung angebrachten Ansatz (4) gebildet wird.

6. Vorrichtung nach Anspruch 5, dadurch gekennzeichnet, daß der Ansatz (4) an der Einlaufstelle der Strömung in ein Saugrohr (5) einen Winkel mit einer Stirnwand (7) einschließt, an der das Saugrohr (5) mündet.

7. Vorrichtung nach Anspruch 2, dadurch gekennzeichnet, daß der den Unterdruck erzeugende Hohlraum (3) in einem Stator oder einem Rotor axialer oder halbaxialer Strömungsmaschinen von einem an der Nabe (8) der Maschine angebrachten und zur Strömungsrichtung parallel verlaufenden Ansatz (4) gebildet wird.

8. Vorrichtung nach Anspruch 7, dadurch gekennzeichnet, daß der den Unterdruck erzeugende halboffene Hohlraum (3) durch eine Abstufung der Nabe (8) gebildet wird.

0156269

Fig.1

Fig.2

0156269

Fig.3

Fig.4

Fig.5

0158269

$P_2$

$P_1 - P_2 > 0$

$P_1$

Fig. 6

Fig. 7

Fig.8          Fig.9          Fig.10          Fig.11

Fig.12

Fig.13

Fig.14

0156269

Fig.15

Fig.16

Fig.17

Fig.18

0156269

Fig.19

Fig.20

Fig.21

Fig.22